# EUROPEAN PATENT APPLICATION

(11) **EP 4 722 909 A2**
(43) Date of publication of application: **08.04.2026**
(21) Application number: 25199884.5
(22) Date of filing: 03.09.2025
(51) Int. Cl.: G06F 9/48, G06F 9/52

(54) **SYSTEMS AND METHODS OF PROGRAM EXECUTION IN A PROCESSING ELEMENT OF A STACKED MEMORY MODULE**

(30) Priority: 13.09.2024 US 202463694788 P; 18.06.2025 US 202519242954
(71) Applicant: Samsung Electronics Co., Ltd., Suwon-si, Gyeonggi-do 16677 (KR)
(72) Inventor: NGUYEN, Marie Mai, San Jose, CA, 95134 (US); ZHANG, Tong, San Jose, CA, 95134 (US); JEONG, Hyoun Kwon, San Jose, CA, 95134 (US); PINTO, Oscar, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Provided are systems, methods, and apparatuses of program execution in a processing element, PE. In one or more examples, the systems, devices, and methods include executing software code at a processing element, PE, of a stacked memory module; pushing, via a dispatcher of the PE, a first command of the software code from a submission queue to a first dispatch queue, the PE comprising multiple dispatch queues that include the first dispatch queue; pushing, via the dispatcher, a barrier command of the software code from the submission queue to the first dispatch queue; holding a second command of the software code at the submission queue based on the barrier command; and pushing the second command from the submission queue to the first dispatch queue based on the dispatcher determining that the first dispatch queue is empty.

## Description

### TECHNICAL FIELD

The disclosure relates generally to memory systems. In particular, the subject matter relates to systems and methods of program execution in a processing element (PE) of a stacked memory module.

### BACKGROUND

The present background section is intended to provide context only, and the disclosure of any concept in this section does not constitute an admission that said concept is prior art.

Stacked memory can include a type of memory architecture used in high-performance computing applications that requires fast data transfer speeds. Stacked memory can include high-bandwidth memory (HBM). HBM may use stacking technology (e.g., 2.5D and/or 3D stacking technology) to pack more memory chips into a smaller space, which reduces the distance data travels between the processor and memory. This results in higher bandwidth, enabling faster data transfer and lower power consumption, which can improve system efficiency.

### OBJECTIVE OF THE DISCLOSURE

The object of the present disclosure is to provide a system including processing elements with reduced latency, improved efficiency and accuracy, and an operating method thereof.

### SUMMARY

In various embodiments, the systems and methods described herein include systems, methods, and apparatuses of program execution in a processing element (PE) architecture of a stacked memory module. In some aspects, the techniques described herein relate to a method including: assigning a first identifier (ID) to a first command of software code executed at a processing element (PE) of a stacked memory module; pushing, via a dispatcher of the PE, the first command from a submission queue to a first dispatch queue, the PE including multiple dispatch queues that include the first dispatch queue; pushing, via the dispatcher, a barrier command of the software code from the submission queue to the first dispatch queue; holding a second command of the software code at the submission queue based on the barrier command, the second command being assigned a second ID different from the first ID; and pushing the second command from the submission queue to the first dispatch queue based on the dispatcher determining that the first dispatch queue is empty.

In some aspects, the techniques described herein relate to a method, wherein pushing the first command to the first dispatch queue is based on the dispatcher determining a type of the first command, the first dispatch queue being associated with the type of the first command and a second dispatch queue of the multiple dispatch queues being associated with a second type of command different from the type of the first command.

In some aspects, the techniques described herein relate to a method, further including pushing the first command from the first dispatch queue to a completion queue based on the PE executing the first command, wherein pushing the second command from the submission queue to the first dispatch queue is based on the dispatcher determining that at least one of the first command or the barrier command is in the completion queue of the PE.

In some aspects, the techniques described herein relate to a method, wherein the dispatcher determining that at least one of the first command or the barrier command is in the completion queue of the PE is based on the dispatcher reading, from the completion queue, at least one of the first ID of the first command or a third ID of the barrier command, the barrier command being assigned the third ID different from the first ID and the second ID.

In some aspects, the techniques described herein relate to a method, wherein executing the first command includes executing a direct memory access command to retrieve a data value from the stacked memory module.

In some aspects, the techniques described herein relate to a method, further including executing the second command based on pushing the second command from the submission queue to a second dispatch queue different from the first dispatch queue, wherein executing the second command includes executing a computation based on the data value retrieved from the stacked memory module and placed in an on-processor memory of the PE.

In some aspects, the techniques described herein relate to a method, wherein executing the first command includes executing a computation based on a data value retrieved from the stacked memory module.

In some aspects, the techniques described herein relate to a method, further including executing the second command based on pushing the second command from the submission queue to a second dispatch queue different from the first dispatch queue, wherein executing the second command includes executing a direct memory access command to write a result of the computation to the stacked memory module.

In some aspects, the techniques described herein relate to a method, wherein the dispatcher includes at least one of a processor, a microcontroller, a field programmable gate array, or an application specific integrated circuit.

In some aspects, the techniques described herein relate to a method, wherein: the PE includes a first computation lane for executing a first instruction set and a second computation lane for executing a second instruction set concurrently with the first instruction set, the multiple dispatch queues correspond to the first computation lane, and a second set of multiple dispatch queues correspond to the second computation lane.

In some aspects, the techniques described herein relate to a method, wherein the multiple dispatch queues include a direct memory access (DMA) input dispatch queue, a compute dispatch queue, and a DMA output dispatch queue.

In some aspects, the techniques described herein relate to a method including: executing software code at a processing element (PE) of a stacked memory module; pushing, via a dispatcher of the PE, a first command of the software code from a submission queue to a first dispatch queue, the PE including multiple dispatch queues that include the first dispatch queue; pushing, via the dispatcher, a barrier command of the software code from the submission queue to the first dispatch queue; holding a second command of the software code at the submission queue based on the barrier command; and pushing the second command from the submission queue to the first dispatch queue based on the dispatcher determining that the first dispatch queue is empty.

In some aspects, the techniques described herein relate to a method, wherein pushing the first command to the first dispatch queue is based on the dispatcher determining a type of the first command, wherein the first dispatch queue is associated with the type of the first command and a second dispatch queue of the multiple dispatch queues is associated with a second type of command different from the type of the first command.

In some aspects, the techniques described herein relate to a method, wherein pushing the second command from the submission queue to the first dispatch queue is based on the dispatcher determining that at least one of the first command or the barrier command is in a completion queue of the PE.

In some aspects, the techniques described herein relate to a method, wherein the first command includes a direct memory access command to retrieve a data value from the stacked memory module.

In some aspects, the techniques described herein relate to a method, further including executing the second command based on pushing the second command from the submission queue to the first dispatch queue, wherein executing the second command includes executing a computation based on the data value retrieved from the stacked memory module and placed in an on-processor memory of the PE.

In some aspects, the techniques described herein relate to a method, wherein: the PE includes a first computation lane for executing a first instruction set and a second computation lane for executing a second instruction set, the multiple dispatch queues correspond to the first computation lane, and a second set of multiple dispatch queues correspond to the second computation lane.

In some aspects, the techniques described herein relate to a method, wherein the multiple dispatch queues include a direct memory access (DMA) input dispatch queue, a compute dispatch queue, and a DMA output dispatch queue.

In some aspects, the techniques described herein relate to a device including: one or more processors; and memory storing instructions that, when executed by the one or more processors, cause the device to: assign a first identifier (ID) to a first command of software code executed at a processing element (PE) of a stacked memory module; push the first command from a submission queue to a first dispatch queue, the PE including multiple dispatch queues that include the first dispatch queue; push a barrier command of the software code from the submission queue to the first dispatch queue; hold a second command of the software code at the submission queue based on the barrier command, the second command being assigned a second **ID** different from the first ID; and push the second command from the submission queue to the first dispatch queue based on the one or more processors determining that the first dispatch queue is empty.

**In** some aspects, the techniques described herein relate to a device, wherein pushing the first command to the first dispatch queue is based on the one or more processors determining a type of the first command, the first dispatch queue being associated with the type of the first command and a second dispatch queue of the multiple dispatch queues being associated with a second type of command different from the type of the first command.

A computer-readable medium is disclosed. The computer-readable medium storing instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described may provide a standalone architecture and program execution model for accelerators (e.g., high-performance computing accelerators) that provide multiple advantages and benefits. For example, the systems and methods described reduce delays caused by barrier functions. In some cases, the systems and methods may incorporate hardware-assisted processing of barrier functions that reduce latency and increase processing speeds. Also, the hardware-assisted systems and methods described herein improve resource utilization and end-to-end performance compared to software-only solutions.

### ADVANTAGEOUS EFFECT OF THE INVENTION

Embodiments of the present disclosure provide systems and operating methods comprising processing elements with reduced latency, improved efficiency, and accuracy.

Specifically, embodiments of the present disclosure provide systems and operating methods comprising processing elements that have improved performance by ensuring that dependent commands executed by the processing elements respect command dependencies.

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings, wherein:
FIG. 1 illustrates an example system in accordance with one or more implementations as described herein.
FIG. 2 illustrates an example system in accordance with one or more implementations as described herein.
FIG. 3 illustrates an example system in accordance with one or more implementations as described herein.
FIG. 4 illustrates an example system in accordance with one or more implementations as described herein.
FIG. 5 illustrates an example system in accordance with one or more implementations as described herein.
FIG. 6 illustrates an example system in accordance with one or more implementations as described herein.
FIG. 7 depicts a flow diagram illustrating an example method associated with the disclosed systems, in accordance with example implementations described herein.
FIG. 8 depicts a flow diagram illustrating an example method associated with the disclosed systems, in accordance with example implementations described herein.
FIG. 9 depicts a flow diagram illustrating an example method associated with the disclosed systems, in accordance with example implementations described herein.
FIG. 10 depicts a flow diagram illustrating an example method associated with the disclosed systems, in accordance with example implementations described herein.
FIG. 11 depicts a flow diagram illustrating an example method associated with the disclosed systems, in accordance with example implementations described herein.
FIG. 12 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed, but to the contrary, the intention is to cover all modifications, equivalents, and alternatives falling within the spirit and scope of the present systems and methods as defined by the appended claims.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid-state card (SSC), solid-state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc-read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of a hardware embodiment, a computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, a hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The provided description is presented to enable one of ordinary skill in the art to make and use the subject matter disclosed herein and to incorporate it in the context of particular applications. While the following is directed to specific examples, other and further examples may be devised without departing from the basic scope thereof.

Various modifications, as well as a variety of uses in different applications, will be readily apparent to those skilled in the art, and the general principles defined herein may be applied to a wide range of embodiments. Thus, the subject matter disclosed herein is not intended to be limited to the embodiments presented, but is to be accorded the widest scope consistent with the principles and novel features disclosed herein.

In the description provided, numerous specific details are set forth in order to provide a more thorough understanding of the subject matter disclosed herein. It will, however, be apparent to one skilled in the art that the subject matter disclosed herein may be practiced without necessarily being limited to these specific details. In other instances, well-known structures and devices are shown in block diagram form, rather than in detail, in order to avoid obscuring the subject matter disclosed herein.

All the features disclosed in this specification (e.g., any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Various features are described herein with reference to the figures. It should be noted that the figures are only intended to facilitate the description of the features. The various features described are not intended as an exhaustive description of the subject matter disclosed herein or as a limitation on the scope of the subject matter disclosed herein. Additionally, an illustrated example need not have all the aspects or advantages shown. An aspect or an advantage described in conjunction with a particular example is not necessarily limited to that example and can be practiced in any other examples even if not so illustrated, or if not so explicitly described.

It is noted that, if used, the labels left, right, front, back, top, bottom, forward, reverse, clockwise and counterclockwise have been used for convenience purposes only and are not intended to imply any particular fixed direction. Instead, the labels are used to reflect relative locations and/or directions between various portions of an object.

Data processing may include data buffering, aligning incoming data from multiple communication lanes, forward error correction (FEC), etc. For example, data may be received by an analog front end (AFE), which can prepare the incoming data for digital processing. The digital portion of the transceivers (e.g., digital signal processor (DSP)) may provide skew management, equalization, reflection cancellation, and/or other functions. It is to be appreciated that the process described herein can provide many benefits, including saving both power and cost.

Moreover, the terms "system," "component," "module," "interface," "model," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Unless explicitly stated otherwise, each numerical value and range may be interpreted as being approximate, as if the word "about" or "approximately" preceded the value of the value or range. Signals and corresponding nodes or ports might be referred to by the same name and are interchangeable for purposes here.

While embodiments may have been described with respect to circuit functions, the embodiments of the subject matter disclosed herein are not limited. Possible implementations may be embodied in a single integrated circuit, a multi-chip module, a single card, system on chip (SoC), or a multi-card circuit pack. As would be apparent to one skilled in the art, the various embodiments might also be implemented as part of a larger system. Such embodiments may be employed in conjunction with, for example, a digital signal processor, microcontroller, field-programmable gate array, application-specific integrated circuit, or general-purpose computer.

As would be apparent to one skilled in the art, various functions of circuit elements may also be implemented as processing blocks in a software program. Such software may be employed in, for example, a digital signal processor, microcontroller, or general-purpose computer. Such software may be embodied in the form of program code embodied in tangible media, such as magnetic recording media, optical recording media, solid-state memory, floppy diskettes, CD-ROMs, hard disk drives, or any other non-transitory machine-readable storage medium, that when the program code is loaded into and executed by a machine, such as a computer, the machine becomes an apparatus for practicing the subject matter disclosed herein. When implemented on a general-purpose processor, the program code segments combine with the processor to provide a unique device that operates analogously to specific logic circuits. Described embodiments may also be manifest in the form of a bit stream or other sequence of signal values electrically or optically transmitted through a medium, stored magnetic-field variations in a magnetic recording medium, etc., generated using a method and/or an apparatus as described herein.

Some systems can produce execution delays and/or execution errors based on the systems failing to respect command dependencies. A given system may receive a command to determine the result of "a+b" (e.g., tensor addition, tensor multiplication, matrix multiplication, etc.). However, the computation of "a+b" may depend on the data "a" and "b" being fetched from system memory, such as high-bandwidth memory (HBM). For example, a given math processor cannot execute a command like "a+b" correctly without first having the values of "a" and "b" in local processor memory, such as cache memory, tightly coupled memory (TCM), etc. where TCM may include a dedicated, high-speed memory block directly connected to a processor core (e.g., core of a PE of an HBM cube, core of an advanced reduced instruction set computer (RISC) machine (ARM) processor of a PE, etc.). Before determining "a+b," a first direct memory access (DMA) command may be dispatched to fetch "a" from system memory (e.g., HBM) and place "a" in local memory (e.g., TCM, local processor memory). Similarly, a second DMA command may be dispatched to fetch "b" from system memory and place "b" in the local memory. Accordingly, with "a" and "b" placed in local memory, a math processor may determine a result "c" from "a+b=c." For example, a tensor core of a PE may determine a result of matrix multiplication of matrix "a" and matrix "b" based on matrix "a" and matrix "b" being fetched and placed in local memory. However, when the processor receives a command like "a+b" before the values of "a" and "b" are retrieved from memory, delays and/or errors can occur (e.g., computing incorrect result), which can increase latency, reduce system efficiency, and/or provide incorrect results (e.g., incorrect results based on a query to a large language model). Accordingly, a need exists to maintain data dependency in processor-in-memory stacked memory systems (e.g., HBM cubes with PEs, such as ARM-based PEs) to ensure that dependent commands are executed in an order that maintains the dependency between the commands (e.g., ensure DMA of "a" and DMA of "b" occur before the PE computes "a+b").

The systems and methods described herein may include a processor of a PE (e.g., ARM processor, central processing unit (CPU), graphics processing unit (GPU), application specific integrated circuit (ASIC), field programmable gate array (FPGA), etc.) that is configured to process commands and requests (e.g., AI accelerator commands, AI accelerator requests). Based on the ARM processor executing software code, the ARM processor may push a command of the software code to a submission queue (SQ) of the PE. In some cases, then ARM processor may push commands to the SQ sequentially (e.g., in an order provided by the software code). In some cases, the PE may include a dispatcher configured to fetch commands from the SQ and push the fetched command to a dispatch queue (DQ) of the PE. The command may remain in the DQ while the command is executed by accelerator components of the PE (e.g., tensor core, math engine, vector engine, floating point unit, accumulator, etc.). The dispatcher or ARM processor may push the command from the DQ to a completion queue (CQ) of the PE once execution of the command is completed.

In some examples, the PE may include multiple lanes of accelerator components (e.g., multiples lanes of tensor cores, math engines, vector engines, floating point units, accumulators, etc.). In some cases, the PE may include multiple DQs per lane of accelerator components. For example, a first computation lane of the PE may include a first DMA input DQ, a first computation DQ, and a first DMA output DQ. A second computation lane of the PE may include a second DMA input DQ, a second computation DQ, and a second DMA output DQ, and so on. Commands may be pushed to a given DQ based on a type associated with the command. For example, DMA input commands may be pushed to an DMA input DQ, computation commands may be pushed to a computation DQ, and DMA output commands may be pushed to an DMA output DQ. In some cases, the dispatcher may parse a command to determine a command type associated with the command. Upon determining the type of command, the dispatcher may send the command to one of multiple dispatch queues according to the type of the command. In some cases, the dispatcher may pause fetching commands from the submission queue and pushing the fetched commands to a dispatch queue based on a barrier command in the submission queue. In some cases, the ARM processor may continue pushing commands to the submission queue while the dispatcher is pausing the fetching of commands from the submission queue. The dispatcher may resume fetching commands from the submission queue when the dispatcher determines that commands preceding the barrier command are completed (e.g., are in a completion queue).

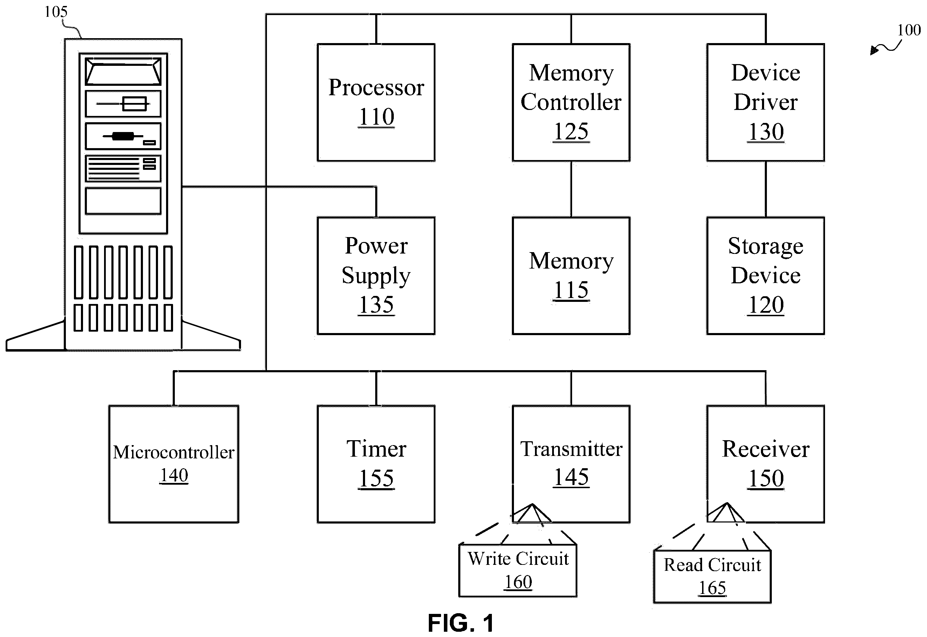

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory (PRAM), Ferroelectric Random Access Memory (FRAM), or Non-Volatile Random Access Memory (NVRAM), Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe^{®}) interface, or a Compute Express Link (CXL) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid-State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120. In the illustrated example, machine 105 may include timer 155, which may be used to time one or more operations, indicate a time period, indicate a lapse of time, indicate an expiration, indicate a timeout, etc.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, microcontroller 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs (including complex instruction set computer (CISC) processors such as x86 processors and/or reduced instruction set computer (RISC) processors such as RISC-V and/or ARM processors), GPUs, NPUs, TPUs, OPUs, and/or the like, executing instructions stored in any type of memory. In some embodiments, one or more components of microcontroller 140 may be implemented as a system-on-chip (SoC) or in an SoC. In some cases, microcontroller 140 may be implemented on a base die of a stacked memory module (e.g., in a PE of an HBM base die). In some cases, an HBM SiP may include multiple HBM cubes, where a base die of at least one of the HBM cubes may include a microcontroller (e.g., each HBM cube includes a microcontroller, each HBM cube includes a base die), one or more PEs, shared memory for processing by the PEs, and an NoC interconnect that connects the microcontroller to the one or more PEs, shared memory, and memory dies stacked vertically on the base die. In some cases, shared memory may be available and shared among PEs of a given HBM cube, while the memory dies stacked vertically on the base die may be available to at least the PEs of a given HBM cube.

In some examples, microcontroller 140 may include any one or combination of logic (e.g., logical circuit), hardware (e.g., processing unit, memory, storage), software, firmware, and the like. In some cases, microcontroller 140 may perform one or more functions in conjunction with processor 110. In some cases, at least a portion of microcontroller 140 may be implemented in or by processor 110 and/or memory 115. The one or more logic circuits of microcontroller 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable microcontroller 140 to provide a standalone architecture and a program execution model for processing in memory (e.g., including a standalone high-bandwidth memory (HBM) architecture and program execution model).

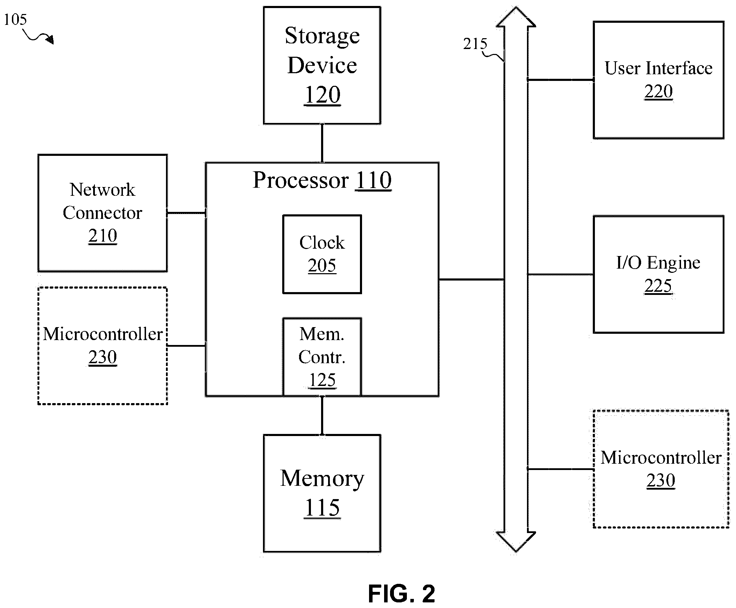

**FIG. 2** illustrates details of machine 105 of FIG. 1, according to examples described herein. In the illustrated example, machine 105 may include processor 110. Processor 110 may include one or more processors and/or one or more dies. Processor 110 may include memory controller 125 (e.g., one or more memory controllers) and clock 205 (e.g. one or more clocks), which may be used to coordinate the operations of the components of the machine. Processor 110 may be coupled to memory 115 (e.g., one or more memory chips, stacked memory, etc.), which may include random access memory (RAM), read-only memory (ROM), or other state preserving media, as examples. Processor 110 may be coupled to storage device 120 (e.g., one or more storage devices), and to network connector 210, which may be, for example, an Ethernet connector or a wireless connector. Processor 110 may be connected to bus 215 (e.g., one or more buses), to which may be attached user interface 220 (e.g., one or more user interfaces) and Input/Output (I/O) interface ports that may be managed using I/O engine 225 (e.g., one or more I/O engines), among other components. As shown, processor 110 may be coupled to microcontroller 230, which may be an example of microcontroller 140 of FIG. 1. Additionally, or alternatively, processor 110 may be connected to bus 215, to which may be attached microcontroller 230.

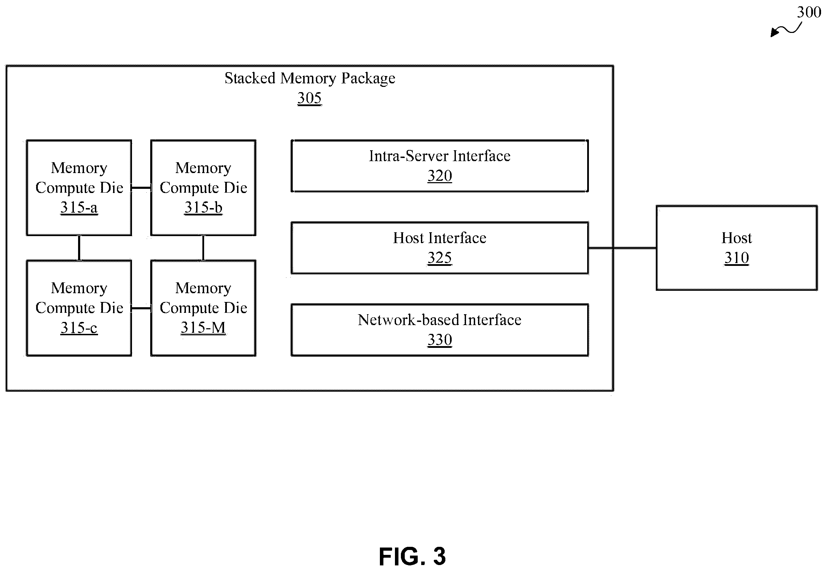

**FIG. 3** illustrates an example system 300 in accordance with one or more implementations as described herein. In some configurations, one or more aspects of system 300 may be implemented by or in conjunction with microcontroller 140 of FIG. 1 and/or microcontroller 230 of FIG. 2. In some configurations, one or more aspects of system 300 may be implemented by or in conjunction with machine 105, components of machine 105, or any combination thereof. The systems and methods described herein may be based on and/or may incorporate system 300 (e.g., at least one component of system 300) to provide program execution in a processing element (PE) architecture of a stacked memory module.

In the illustrated example, system 300 may include stacked memory package 305 and host 310. In some cases, stacked memory package 305 may include or may be implemented in a high-bandwidth memory (HBM) system in package (SiP). As shown, stacked memory package 305 may include one or more memory compute dies (e.g., memory compute die 315-a, memory compute die 315-b, memory compute die 315-c, etc.), a intra-server interface 320, a host interface 325, and a network-based interface 330. In some examples, intra-server interface 320 may be configured as a peer-to-peer (P2P) intra-server interface, and/or network-based interface 330 may be configured as a P2P network-based interface, enabling P2P data transfer and direct communication between stacked memory package 305 and one or more other devices connected (e.g., connected directly, connected physically, connected by wired connection) to stacked memory package 305 (e.g., avoiding communication of data or commands having to pass through a CPU, etc.).

In some examples, a given stacked memory package such as stacked memory package 305 may include one or more memory compute dies (e.g., 8, 12, 16, 24, 32, etc.). It is noted that the number of memory compute dies (e.g., stacked memory modules, HBM cubes) that may be included in a given stacked memory package (e.g., HBM SiP) may be based on the technology available to fabricate the stacked memory modules.

In some examples, stacked memory package 305 may include some number of memory compute dies. In the illustrated example, the one or more memory compute dies may include M memory compute dies, where M is a positive integer (e.g., positive integer from 1 to 500). In some cases, a given memory compute die (e.g., memory compute die 315-a, memory compute die 315-b, or memory compute die 315-c, etc.) may include or may be implemented as a stacked memory module (e.g., 2.5D and/or 3D stacked DRAM, 2.5D and/or 3D stacked NAND, etc.) that includes memory and compute resources (e.g., PEs, processor units, artificial intelligence (AI) accelerators, etc.).

In the illustrated example, intra-server interface 320, host interface 325, and/or network-based interface 330 may include physical interfaces that allow components or systems external to stacked memory package 305 connect to stacked memory package 305 and/or components of stacked memory package 305. In some examples, intra-server interface 320 may include a P2P high speed intra-server interconnect based on at least one of compute express link (CXL) or ultra-accelerator link (UAL). For example, intra-server interface 320 may provide a high-speed interface for communications within a given server (e.g., between stacked memory package 305 and other components within a given server). In some cases, host interface 325 may include a high-speed interconnect to a host (e.g., a host of stacked memory package 305, machine 105). Network-based interface 330 may include an inter-server interface based on at least one of InfiniBand or ethernet. For example, network-based interface 330 provide a high-speed interface for communications between stacked memory package 305 and one or more servers external to or separate from stacked memory package 305.

As shown, memory compute die 315-a may be communicatively coupled to memory compute die 315-b and memory compute die 315-c, and memory compute die 315-M may be communicatively coupled to memory compute die 315-b and memory compute die 315-c. In some cases, a communication interface between the one or more memory compute dies may be based on a die-to-die (D2D) and/or universal chiplet interconnect express (UCIe) interconnection interface.

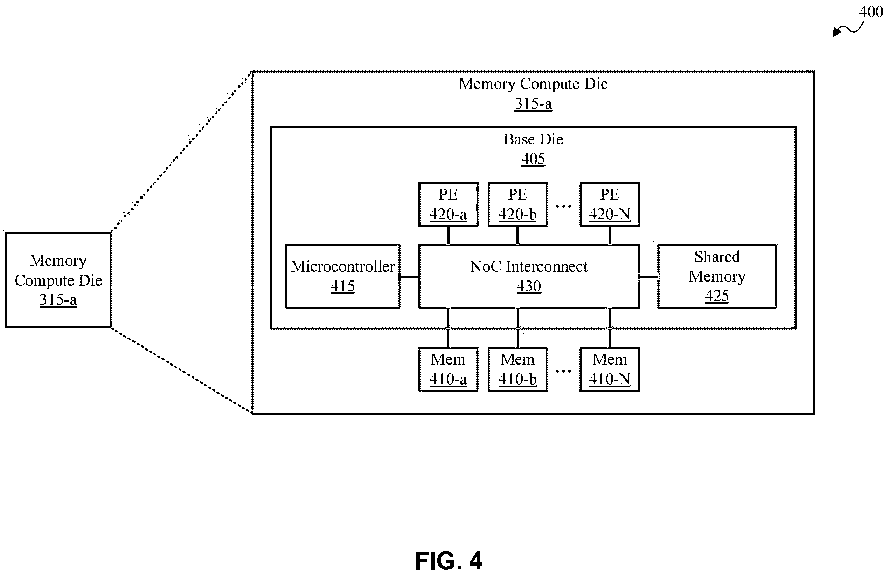

**FIG. 4** illustrates an example system 400 in accordance with one or more implementations as described herein. In some configurations, one or more aspects of system 400 may be implemented by or in conjunction with microcontroller 140 of FIG. 1 and/or microcontroller 230 of FIG. 2. In some configurations, one or more aspects of system 400 may be implemented by or in conjunction with machine 105, components of machine 105, or any combination thereof. The systems and methods described herein may be based on and/or may incorporate system 400 (e.g., at least one component of system 400) to provide program execution in a processing element (PE) architecture of a stacked memory module.

In the illustrated example, system 400 may depict aspects of memory compute die 315-a. As shown, memory compute die 315-a may include base die 405 and one or more memory dies (e.g., memory 410-a, memory 410-b, etc.). In some cases, the one or more memory dies may include N memory dies (e.g., memory 410-N), where N is a positive integer (e.g., positive integer from 1 to 100, etc.). As shown, base die 405 may include microcontroller 415, one or more PEs (e.g., PE 420-a, PE 420-b, etc.), shared memory 425, and NoC interconnect 430. Microcontroller 415 may be an example of microcontroller 140 and/or microcontroller 230. In some cases, the one or more PEs may include up to N PEs (e.g., PE 420-N), which may be based on the N memory dies. In some cases, memory compute die 315-a may include less, more, or the same number of PEs as the number of memory dies.

As shown, NoC interconnect 430 may communicatively couple microcontroller 415 to the one or more PEs, shared memory 425, and one or more memory dies. Accordingly, microcontroller 415 may control one or more aspects of processing performed by the one or more PEs (e.g., send control messages, send commands, initiate processing of one or more PEs, assign processing to one or more PEs, pause processing of one or more PEs, restart processing of one or more PEs, etc.). An NoC interconnect may be used for SoCs and/or SiPs. The systems and methods may include a coherent NoC interconnect that ensures cache coherence across a given system, maintaining consistency of data stored in local caches of various processors (or cores) in the multi-processor systems described herein. When multiple processors are accessing and modifying the same memory locations, a coherent NoC interconnect ensures that any changes made by one processor are immediately visible to all other processors, preventing data inconsistencies. Additionally, or alternatively, the systems and methods may include a non-coherent NoC interconnect, which may not implement cache coherence protocols across a given system. With non-coherent NoC interconnects, each processor or core may manage its local cache independently, without ensuring that data modifications are visible across the system. Non-coherent systems may implement software mechanisms to ensure data consistency, which can be less efficient, but simpler and less power-consuming than hardware coherence mechanisms.

As depicted in system 400, a given stacked memory compute die (e.g., memory compute die 315-a) may include compute resources (e.g., at least one processor die; multiple PEs of one or more processor dies) and memory resources (e.g., one or more memory dies, HBM dies, memory stacked on base die 405). In some cases, shared memory 425 may include a shared cache (e.g., shared SRAM, shared TCM) that the one or more PEs may use to share data between PEs based on computations performed by the PEs (e.g., PE 420-a sharing data with PE 420-b via shared memory 425).

In some examples, microcontroller 415 may orchestrate execution of an application on memory compute die 315-a. For example, microcontroller 415 may dispatch and/or orchestrate distribution of instructions of an application to the one or more PEs (e.g., for processing of the instructions by the one or more PEs). Microcontroller 415 may run firmware code that enables microcontroller 415 to manage compute and memory resources in memory compute die 315-a. Microcontroller 415 may send compute and memory commands to the one or more PEs and memory dies via NoC interconnect 430. For example, microcontroller 415 may provide a memory location in memory 410-a to PE 420-b and/or provide a memory location in memory 410-b to PE 420-a, and so on.

At least one PE (e.g., PE 420-a, PE 420-b, etc.) may include an independent computing unit (e.g., AI accelerator) designed for parallel processing and AI programming. For example, a given PE may include a processing core that can execute its own instructions independently from and/or simultaneously with other PEs on a given memory compute die. For instance, two or more PEs (e.g., PE 420-a, PE 420-b, etc.) may work together (e.g., in parallel execution) to perform complex calculations in an accelerated manner.

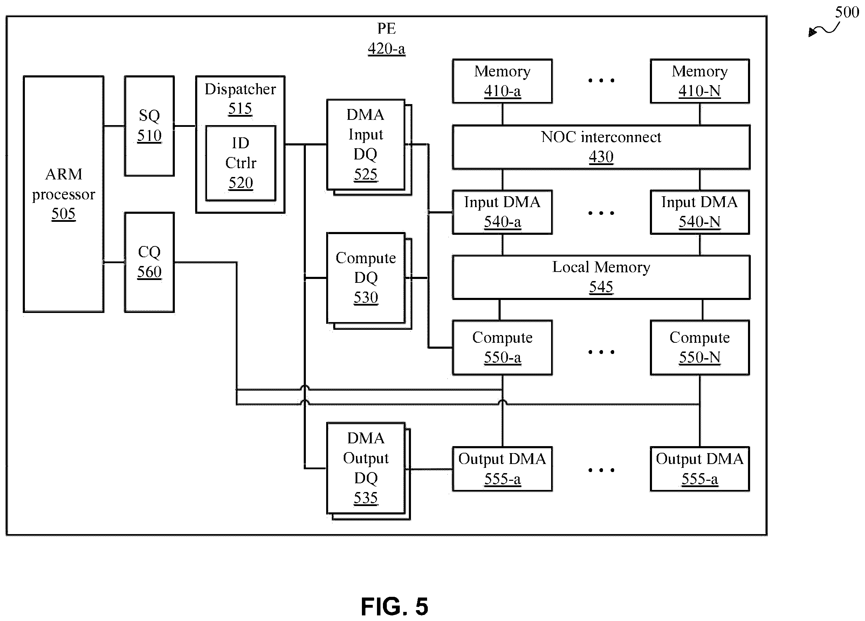

**FIG. 5** illustrates an example system 500 in accordance with one or more implementations as described herein. In some configurations, one or more aspects of system 500 may be implemented by or in conjunction with microcontroller 140 of FIG. 1 and/or microcontroller 230 of FIG. 2. In some configurations, one or more aspects of system 500 may be implemented by or in conjunction with machine 105, components of machine 105, or any combination thereof. The systems and methods described herein may be based on and/or may incorporate system 500 (e.g., at least one component of system 500) to provide program execution in a processing element (PE) architecture of a stacked memory module.

In the illustrated example, system 500 may depict aspects of PE 420-a. As shown, PE 420-a may include a control processor (e.g., ARM processor 505), a submission queue (SQ) 510, dispatcher 515, a DMA input dispatch queue (DQ) 525, compute DQ 530, DMA output DQ 535, system memory (e.g., memory 410-a to memory 410-N), NoC interconnect 430, one or more DMA input units (e.g., input DMA 540-a to input DMA 540-N), local memory 545 (e.g., shared memory, cache memory, TCM), one or more accelerators (e.g., compute 550-a to compute 550-N), one or more DMA output units (e.g., output DMA 555-a to output DMA 555-N), and a completion queue (CQ) 560. As shown, dispatcher 515 may include an identifier (ID) controller 520. It is noted that PE 420-a may include one or more SQs, one or more DQs, and/or one or more CQs. Although the illustrated example depicts a processor of PE 420-a as an ARM processor (e.g., ARM processor 505), some embodiments may include one or more other types of processors (e.g., CPU, GPU, ASIC, FPGA, etc.) in place or in addition to ARM processor 505.

The accelerator or processing portion of PE 420-a (e.g., accelerator hardware, processing hardware of PE 420-a) may include input DMA 540-a to input DMA 540-N, local memory 545, compute 550-a to compute 550-N, output DMA 555-a to output DMA 555-N. In some cases, at least one of compute 550-a to compute 550-N may include a feeder unit (e.g., for data reshaping, data transposing, etc.), at least one tensor core (e.g., for matrix multiplication, etc.), a math engine (e.g., vector engine, floating point unit), an accumulator, etc.

As shown, PE 420-a may include multiple computation lanes. For example, PE 420-a may include N computation lanes, where N is a positive integer (e.g., positive integer from 1 to 100). In the illustrated example, a first computation lane may include memory 410-a, NoC interconnect 430, input DMA 540-a, local memory 545, compute 550-a, and output DMA 555-a. An Nth computation lane of PE 420-a may include memory 410-N, NoC interconnect 430, input DMA 540-N, local memory 545, compute 550-N, and outputDMA 555-N. In some cases, a first set of DQs (e.g., DMA input DQ 525, compute DQ 530, DMA output DQ 535) may connect and/or correspond to the first computation lane, a second set of DQs may connect and/or correspond to a second computation lane, and so on.

In some cases, local memory 545 may be based on and/or may include tightly coupled memory (TCM). TCM can include high-speed on-chip memory that is directly accessible to a processor core (e.g., physically near the processor core). TCM can include a dedicated memory area with the fastest possible access within the processor itself. Thus, TCM may be designed to provide low latency access for critical data and code (e.g., interrupt handlers, real-time tasks). TCM may be configured to bypass the cache mechanism, ensuring direct access to the stored data without potential cache misses.

In some examples, ARM processor 505 may execute instructions from software code (e.g., instructions from a program, from an application, from an accelerator task, etc.). ARM processor 505 may feed instructions from the software code to SQ 510 (e.g., feed instructions sequentially to SQ 510). In some cases, SQ 510 may include a first in first out (FIFO) or be configured to function like a FIFO. Dispatcher 515 may fetch a command from SQ 510 (e.g., oldest command in SQ 510) and push the fetched command to a dispatch queue (e.g., DMA input DQ 525, compute DQ 530, DMA output DQ 535). In some cases, dispatcher 515 may parse a command, determine a command type based on the parsing, and push the command to a DQ based on the command type. For example, dispatcher 515 may parse a command to determine whether the command is a DMA input command, a compute command, or a DMA output command. Dispatcher 515 may push a DMA input command to DMA input DQ 525, push a compute command to compute DQ 530, push a DMA output command DMA output DQ 535, etc.

When a command calls for data to be read from system memory (e.g., memory 410-a) and moved to local memory 545, dispatcher 515 may push the command to DMA input DQ 525 and input DMA 540-a (or another input DMA of another computation lane) may process the data transfer (e.g., DMA read "a" and DMA read "b" from system memory). When a command calls for computation (e.g., compute "a+b=c"), dispatcher 515 may push the command to compute DQ 530 and compute 550-a (or another compute resource of another computation lane) may process the command (e.g., determine the value of "c" based on a result of "a+b=c"). When a command calls for data to be written to system memory (e.g., memory 410-a) from local memory 545 (e.g., save result "c" to system memory), dispatcher 515 may push the command to DMA output DQ 535 and output DMA 555-a (or another output DMA of another computation lane) may process the data transfer (e.g., DMA write "c" to system memory).

When a command is completed, dispatcher 515 and/or ARM processor 505 may push the command from a DQ to CQ 560. For example, upon completing a DMA input command, dispatcher 515 and/or ARM processor 505 may push the command from DMA input DQ 525 to CQ 560. Upon completing a compute command, dispatcher 515 and/or ARM processor 505 may push the command from compute DQ 530 to CQ 560. Upon completing a DMA output command, dispatcher 515 and/or ARM processor 505 may push the command from DMA output DQ 535 to CQ 560.

In some cases, ID controller 520 may perform one or more operations in conjunction with ARM processor 505 and/or dispatcher 515. For example, ID controller 520 may assign an identifier to a command. In some cases, command IDs may be assigned sequentially (e.g., first command assigned identifier id1, second command assigned identifier id2, etc.) In some cases, ID controller 520 may track identifiers assigned to commands. For example, ID controller 520 may track a location of a command based on an identifier assigned to the command. In some cases, ID controller 520 may determine a status of a command based on command ID. For example, dispatcher 515 and/or ARM processor 505 may track an ID of a command and determine the command is pending processing based on a command in SQ 510 having the tracked ID. In some cases, dispatcher 515 and/or ARM processor 505 may determine a command is being processed based on a command in a dispatch queue (e.g., DMA input DQ 525, compute DQ 530, DMA output DQ 535) having the tracked ID. In some cases, dispatcher 515 and/or ARM processor 505 may determine a command is completed based on a command in CQ 560 having the tracked ID.

In some examples, dispatcher 515 may push a barrier command from SQ 510 to a DQ of PE (e.g., DMA input DQ 525, compute DQ 530, or DMA output DQ 535). Dispatcher 515 may pause fetching commands from SQ 510 based on the barrier command. ARM processor 505 may continue pushing commands to SQ 510 while dispatcher 515 pauses fetching commands from SQ 510. In some cases, dispatcher 515 may determine which commands are still pending based on the barrier command (e.g., commands in the DQs are pending, or currently being processed).

Dispatcher 515 may hold the barrier command in a DQ until all commands preceding the barrier command are processed. For example, dispatcher 515 may continue pushing commands from SQ 510 to an appropriate DQ (e.g., based on command type) when dispatcher 515 determines the DQs are empty (e.g., DMA input DQ 525, compute DQ 530, and DMA output DQ 535 are empty). Additionally, or alternatively, dispatcher 515 may continue pushing commands from SQ 510 to the DQs when dispatcher 515 determines the commands that preceded the barrier command (e.g., determined based on command IDs) are in CQ 560. Additionally, or alternatively, dispatcher 515 may continue pushing commands from SQ 510 to the DQs when dispatcher 515 determines the barrier command is in CQ 560.

Dispatcher 515 may pause fetching commands from SQ 510 for a given lane. For example, when the barrier command is associated with commands in a first lane, dispatcher 515 may continue fetching commands for a second lane (e.g., pushing the commands to DQs of the second lane), etc.

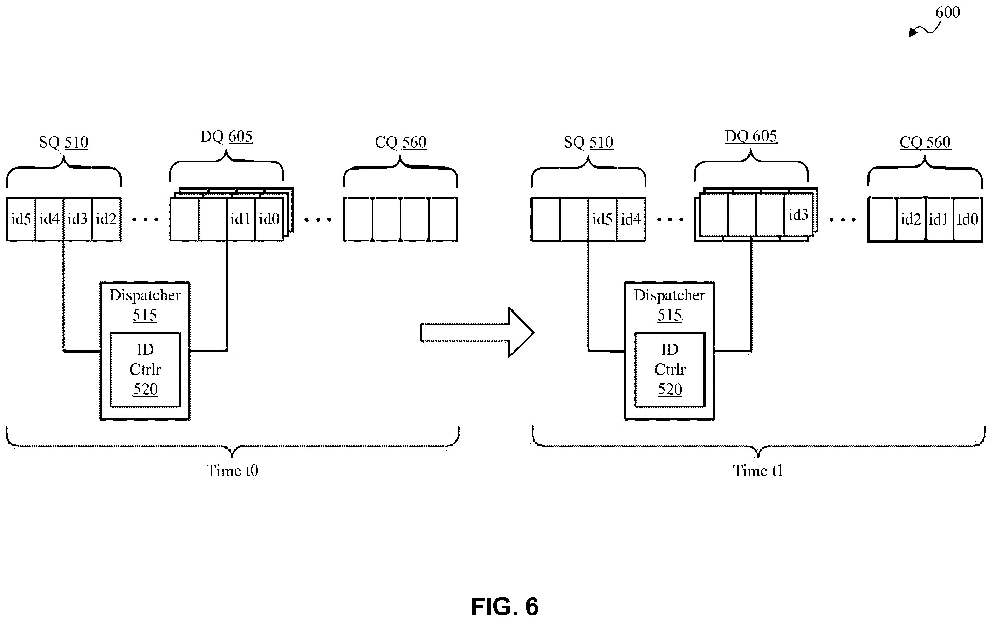

**FIG. 6** illustrates an example system 600 in accordance with one or more implementations as described herein. In some configurations, one or more aspects of system 600 may be implemented by or in conjunction with microcontroller 140 of FIG. 1 and/or microcontroller 230 of FIG. 2. In some configurations, one or more aspects of system 600 may be implemented by or in conjunction with machine 105, components of machine 105, or any combination thereof. The systems and methods described herein may be based on and/or may incorporate system 600 (e.g., at least one component of system 600) to provide program execution in a processing element (PE) architecture of a stacked memory module.

In the illustrated example, system 600 may depict aspects of PE 420-a. For example, system 600 may depict SQ 510, dispatcher 515, ID controller 520, a set of DQs (e.g., DQ 605), and CQ 560 of PE 420-a. Aspects of system 600 may be based on software code (e.g., "code") executed by PE 420-a (e.g., executed by one or more components of PE 420-a, such as ARM processor 505, dispatcher 515, compute 550-a, compute 550-N, etc.). As shown, system 600 may depict a status of SQ 510, DQ 605, and CQ 560, and a status of commands from the code at time t0 (e.g., during a first time period), and at time t1 (e.g., during a second time period). An example of the code may include the following:

```
      Int main() {
      id0=DMA_HBM2TCM_command(A);
      id1= DMA_ HBM2TCM_ command(B);
      id_list = {id0, id1}
      pe_list = {};
      id2=hw_barrier (id_list, pe_list);
      id3=tensorCore_command (A, B, C);
      id_list2 = {id0, id1, id3};
      id4=hw_barrier(id_list2, pe_list);
      id5=DMA_TCM2HBM_command(C);
      }
```

As shown, the provided example code includes setting a first DMA command to identifier id0 (e.g., transfer data A from HBM to local memory via a first DMA read) and setting a second DMA command to identifier id1 (e.g., transfer data B from HBM to local memory via a second DMA read). The code associates identifier id0 with identifier id1 in id_list. In some cases, the code may indicate a list of PEs associated with executing the code. For example, at least one PE (e.g., PE 420-a) may execute the code. The code sets a first barrier command to identifier id2. As shown, the barrier command is associated with id_list (e.g., associated with the first DMA command and the second DMA command) and/or associated pe_list. For example, barrier command may include id_list and/or pe_list as arguments. The code sets a compute command (e.g., tensorCore_command (A, B, C)) to identifier id3. The code may create a second ID list id_list2 that associates the first DMA command (e.g., DMA input A), the second DMA command (e.g., DMA input B), and the compute command (e.g., a tensor core operation computes C based on inputs A and B). The code sets a second barrier command to identifier id4 (e.g., with id_list2 and pe_list as arguments). The code sets a third DMA command with identifier id5, which writes the result C to system memory (e.g., HBM).

Based on the code, the commands may be added to SQ 510 (e.g., at time t0, during a first time period). Dispatcher 515 (e.g., via ID controller 520) may assign IDs to the commands in SQ 510. In some cases, dispatcher 515 may send the IDs to an ARM processor (e.g., ARM processor 505) via mailbox. As shown, dispatcher 515 may dispatch the commands with identifier id0 and identifier id1 to an appropriate dispatch queue (e.g., DQ 605, DMA input DQ 525). When dispatcher 515 identifies a barrier command (e.g., the first barrier command with identifier id2), dispatcher 515 may stop or pause the pushing of commands from SQ 510 to DQ 605. For example, after pushing the first DMA command with identifier id0 and the second DMA command with identifier id1 to DQ 605, dispatcher 515 may proceed to fetch the next available command in SQ 510.

Upon determining that the next available command in SQ 510 is a barrier command, dispatcher 515 may pause the pushing of commands from SQ 510 to DQ 605. Based on the barrier command, dispatcher 515 may stop or pause pushing commands from SQ 510 to DQ 605 until dispatcher 515 determines that commands with specific IDs (e.g., identifier id0, identifier id1) are completed. For example, dispatcher 515 may stop or pause pushing commands from SQ 510 to DQ 605 until all commands that precede the barrier command and that are being processed (e.g., all commands already in a dispatch queue such as DQ 605 when the dispatcher identifies the barrier command) are completed.

In some cases, dispatcher 515 and/or ARM processor 505 may determine that a set of commands are completed based on the dispatcher 515 and/or ARM processor 505 determining that the set of commands are pushed to CQ 560. Dispatcher 515, ARM processor 505, and/or a compute resource of PE 420-a (e.g., compute 550-a) may push a completed command from DQ 605 to CQ 560. When dispatcher 515 determines (e.g., is notified via ARM processor 505 and/or a compute resource of PE 420-a, such as compute 550-a) that the set of commands are in CQ 560, dispatcher 515 may resume fetching commands from SQ 510 and pushing the commands to an appropriate dispatch queue (e.g., DMA input commands to a DMA input DQ, compute commands to a compute DQ, and DMA output commands to a DMA output DQ).

As shown, at time t1 (e.g., during a second time period), dispatcher 515 may determine that the first DMA command with identifier id0 and the second DMA command with identifier id1 are in CQ 560. Accordingly, dispatcher 515 may resume fetching commands from SQ 510 and pushing the commands to an appropriate dispatch queue, such as DQ 605. As shown, dispatcher 515 may move the first barrier command with identifier id2 to CQ 560, making the compute command (e.g., tensorCore_command (A, B, C)) with identifier id3 the next available command in SQ 510. As shown, dispatcher 515 may push the compute command with identifier id3 to a compute dispatch queue of DQ 605. Accordingly, a tensor core of PE 420-a may perform the computation of the compute command (e.g., determining a value of C based on A and B).

As shown, when dispatcher 515 goes to fetch the second barrier command with identifier id4, dispatcher 515 may stop pushing commands from SQ 510 to DQ 605. When dispatcher 515 determines that the compute command with identifier id3 is completed (e.g., determines the compute command with identifier id3 is in CQ 560), dispatcher 515 may resume pushing commands from SQ 510 to DQ 605. For example, with the compute command with identifier id3 and the second barrier command with identifier id4 in CQ 560, dispatcher 515 may push the third DMA command with identifier id5 to DQ 605, where an output DMA unit writes the result C to system memory (e.g., HBM).

Based on the systems and methods described herein, all commands with specific IDs (e.g., identifier id1, identifier id0) are guaranteed to be executed and completed by PE 420-a before any command that occurs after the barrier command. Accordingly, the systems and methods may provide program execution in a processing element (PE) architecture of a stacked memory module that is non-blocking and asynchronous. An ARM processor (e.g., ARM processor 505) can keep sending commands to SQ 510 after the dispatcher identifies a barrier command, but any command after the barrier command is held in SQ 510 until the commands preceding the barrier command are completed.

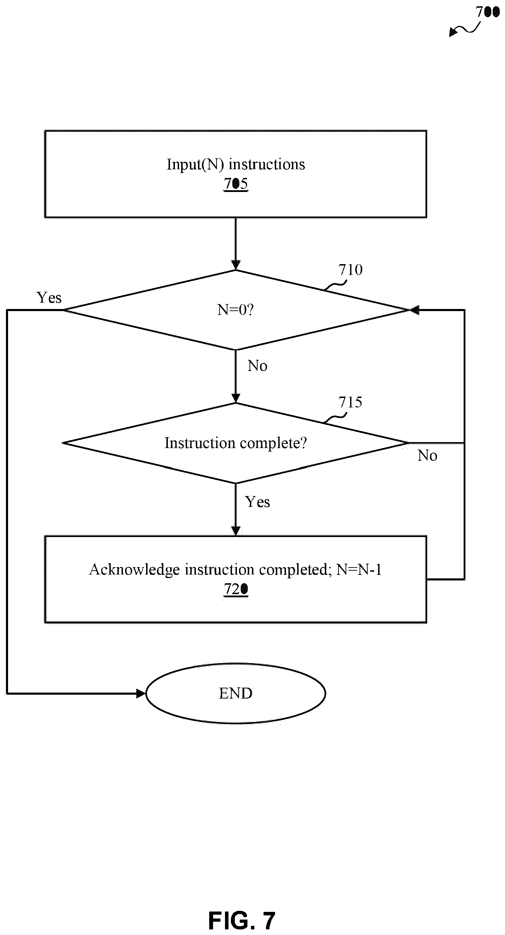

**FIG. 7** depicts a flow diagram illustrating an example method 700 associated with the disclosed systems, in accordance with example implementations described herein. In some configurations, one or more aspects of method 700 may be implemented by or in conjunction with microcontroller 140 of FIG. 1 and/or microcontroller 230 of FIG. 2. In some configurations, one or more aspects of method 700 may be implemented by or in conjunction with machine 105, components of machine 105, or any combination thereof. The depicted method 700 is just one implementation and one or more operations of method 700 may be rearranged, reordered, omitted, and/or otherwise modified such that other implementations are possible and contemplated.

At 705, method 700 may include receiving N input instructions. For example, an ARM processor (e.g., ARM processor 505) may receive N input instructions from software code assigned for execution to a PE of the ARM processor (e.g., PE 420-a).

At 710, method 700 may include determining whether N equals 0 (e.g., test if "N=0" is true). For example, the ARM processor and/or a dispatcher (e.g., dispatcher 515) may determine whether N equals 0. If the ARM processor and/or dispatcher determines that N equals 0, then method 700 may determine that the execution of the N instructions is completed.

At 715, when method 700 determines that N does not equal 0, method 700 may include determining whether an instruction of the N instructions is completed. For example, the dispatcher may determine whether the instruction is in a completion queue (e.g., CQ 560). When method 700 determines that the instruction is not completed (e.g., not in CQ 560), method 700 may return to 710.

At 720, method 700 may include acknowledging the instruction is completed. For example, the dispatcher may acknowledge (e.g., to the ARM processor) that the instruction is completed. In some cases, method 700 may set N equal to N-1 (e.g., reduce N by 1 to perform a next instruction of the N instructions). As shown, method 700 may return to 710 based on acknowledging the instruction is completed.

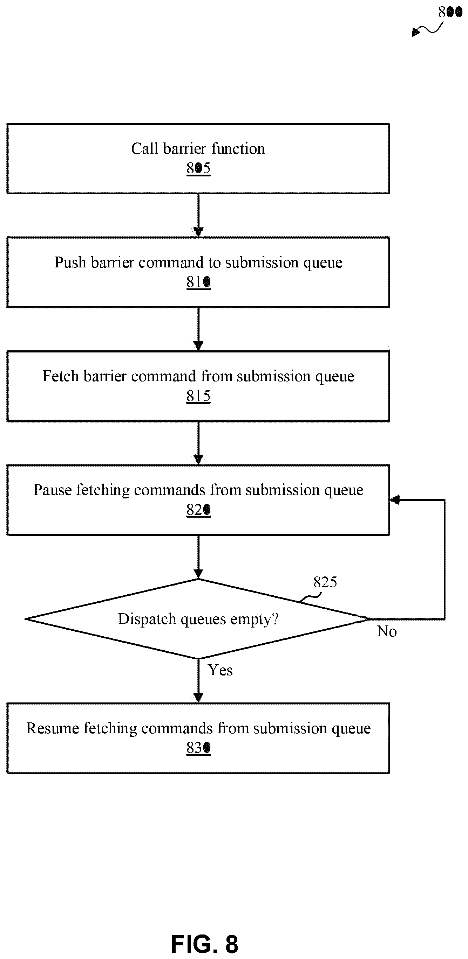

**FIG. 8** depicts a flow diagram illustrating an example method 800 associated with the disclosed systems, in accordance with example implementations described herein. In some configurations, one or more aspects of method 800 may be implemented by or in conjunction with microcontroller 140 of FIG. 1 and/or microcontroller 230 of FIG. 2. In some configurations, one or more aspects of method 800 may be implemented by or in conjunction with machine 105, components of machine 105, or any combination thereof. The depicted method 800 is just one implementation and one or more operations of method 800 may be rearranged, reordered, omitted, and/or otherwise modified such that other implementations are possible and contemplated.

At 805, method 800 may include calling a barrier function. For example, a dispatcher (e.g., dispatcher 515) may call a barrier function based on a set of code being executed by a PE of the dispatcher (e.g., PE 420-a).

At 810, method 800 may include pushing a barrier command to a submission queue. For example, an ARM processor (e.g., ARM processor 505) may push a barrier command of a barrier function to a submission queue (e.g., SQ 510).

At 815, method 800 may include fetching the barrier command from the submission queue. For example, the dispatcher may fetch the barrier command from the submission queue and place the barrier command in a dispatch queue.

At 820, method 800 may include pausing the fetching of commands from the submission queue. For example, based on fetching the barrier command from the submission queue, the dispatcher may pause the fetching of a next command from the submission queue.

At 825, method 800 may include determining whether the dispatch queues are empty. For example, the dispatcher may determine whether the dispatch queues associated with the barrier command (e.g., dispatch queues of DQ 605) are empty. When the dispatcher determines that the dispatch queues are not empty, the dispatcher may continue pausing the fetching of commands from the submission queue (e.g., method 800 returns to 820).

At 830, method 800 may include resuming fetching commands from the submission queue. For example, when the dispatcher determines that the dispatch queues are empty (e.g., all commands preceding the barrier command are completed), the dispatcher may resume fetching commands from the submission queue. For example, to proceed with processing, the dispatcher and/or ARM processor may read the completion queue to determine that a command or set of commands (e.g., commands from a given set of code) are completed. For example, the dispatcher or ARM processor may verify that one or more commands are completed when the one or more commands are in the completion queue (e.g., and not in or no longer in the dispatch queue). Thus, after encountering a barrier function (e.g., "hw_barrier()") in the code, the dispatcher and/or ARM processor can verify that a dependent command is completed by checking the completion queue.

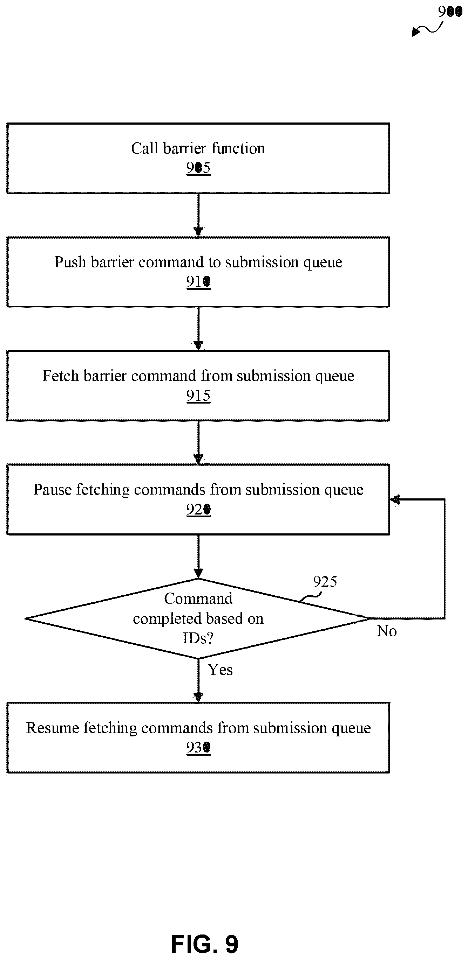

**FIG. 9** depicts a flow diagram illustrating an example method 900 associated with the disclosed systems, in accordance with example implementations described herein. In some configurations, one or more aspects of method 900 may be implemented by or in conjunction with microcontroller 140 of FIG. 1 and/or microcontroller 230 of FIG. 2. In some configurations, one or more aspects of method 900 may be implemented by or in conjunction with machine 105, components of machine 105, or any combination thereof. The depicted method 900 is just one implementation and one or more operations of method 900 may be rearranged, reordered, omitted, and/or otherwise modified such that other implementations are possible and contemplated.

At 905, method 900 may include calling a barrier function. For example, a dispatcher (e.g., dispatcher 515) may call a barrier function based on a set of code being executed by a PE of the dispatcher (e.g., PE 420-a).

At 910, method 900 may include pushing a barrier command to a submission queue. For example, an ARM processor (e.g., ARM processor 505) may push a barrier command of a barrier function to a submission queue (e.g., SQ 510).

At 915, method 900 may include fetching the barrier command from the submission queue. For example, the dispatcher may fetch the barrier command from the submission queue and place the barrier command in a dispatch queue.

At 920, method 900 may include pausing the fetching of commands from the submission queue. For example, based on fetching the barrier command from the submission queue, the dispatcher may pause the fetching of a next command from the submission queue.

At 925, method 900 may include determining whether a command is completed based on command ID. For example, the dispatcher may determine whether a command with a tracked ID is in a completion queue (e.g., CQ 560). For example, the dispatcher may determine whether a command with identifier id3 is in the completion queue. When the dispatcher determines that the command with a tracked ID is not in the completion queue, the dispatcher may continue pausing the fetching of commands from the submission queue (e.g., method 900 returns to 920).

At 930, method 900 may include resuming fetching commands from the submission queue. For example, when the dispatcher determines that the command with the tracked ID is in the completion queue, the dispatcher may resume fetching commands from the submission queue. For example, to proceed with processing, the dispatcher and/or ARM processor may read the completion queue to determine processing of dependent commands is completed. For example, the dispatcher or ARM processor may verify that one or more dependent commands are completed when IDs of the one or more dependent commands are in the completion queue (e.g., and no longer in the dispatch queue). Thus, after encountering a barrier function (e.g., "hw_barrier()") in software code, the dispatcher and/or ARM processor can verify that a dependent command is completed by checking command IDs of commands in the completion queue.

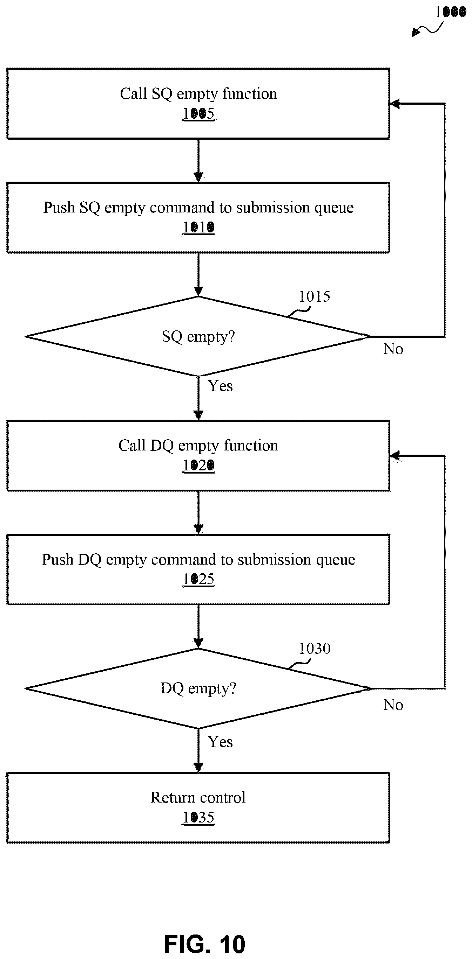

**FIG. 10** depicts a flow diagram illustrating an example method 1000 associated with the disclosed systems, in accordance with example implementations described herein. In some configurations, one or more aspects of method 1000 may be implemented by or in conjunction with microcontroller 140 of FIG. 1 and/or microcontroller 230 of FIG. 2. In some configurations, one or more aspects of method 1000 may be implemented by or in conjunction with machine 105, components of machine 105, or any combination thereof. The depicted method 1000 is just one implementation and one or more operations of method 1000 may be rearranged, reordered, omitted, and/or otherwise modified such that other implementations are possible and contemplated.

At 1005, method 1000 may include calling an empty SQ function. For example, an ARM processor (e.g., ARM processor 505) may execute a program, and the program may call an empty SQ function, such as emptySQ(). The empty SQ function may be configured to determine whether an SQ (e.g., SQ 510) is empty. In some cases, the program being executed may include or may be part of a synchronize function (e.g., sync function).

At 1010, method 1000 may include pushing an empty SQ command (e.g., of the empty SQ function) to a submission queue (e.g., SQ 510). For example, the ARM processor may push the empty SQ command to the submission queue based on the ARM processor executing the program.

At 1015, method 1000 may include determining whether the submission queue is empty. For example, a dispatcher (e.g., dispatcher 515) may determine whether the submission queue is empty based on the dispatcher fetching the empty SQ command from the submission queue. When the dispatcher determines that the submission queue is not empty, method 1000 may return to 1005.

At 1020, method 1000 may include calling a DQ empty function. For example, when the dispatcher determines that the submission queue is empty, the dispatcher may return control of the program to the ARM processor and the ARM processor may call an empty DQ function, such as emptyDQ(). The empty DQ function may be configured to determine whether a dispatch queue (e.g., DQ 605) is empty. In some cases, the empty DQ function may be part of the sync function.

At 1025, method 1000 may include pushing an empty DQ command (e.g., of the empty DQ function) to the submission queue. For example, the ARM processor may push the empty DQ command to the submission queue based on the ARM processor executing the program.

At 1030, method 1000 may include determining whether the dispatch queue is empty. For example, a dispatcher (e.g., dispatcher 515) may determine whether the dispatch queue is empty based on the dispatcher fetching the empty DQ command. When the dispatcher determines that the dispatch queue is not empty, method 1000 may return to 1020.

At 1035, method 1000 may include returning control. For example, when the dispatcher determines that the dispatch queue is empty, the dispatcher may return control of the program to the ARM processor. In some cases, the ARM processor may call a next function in the program based on the dispatcher returning control of the program. In some cases, the ARM processor may notify a host or application (e.g., host 310, a host of the PE, an application of the host such as the program being executed, an operating system of the host, etc.) that execution of the program is complete.

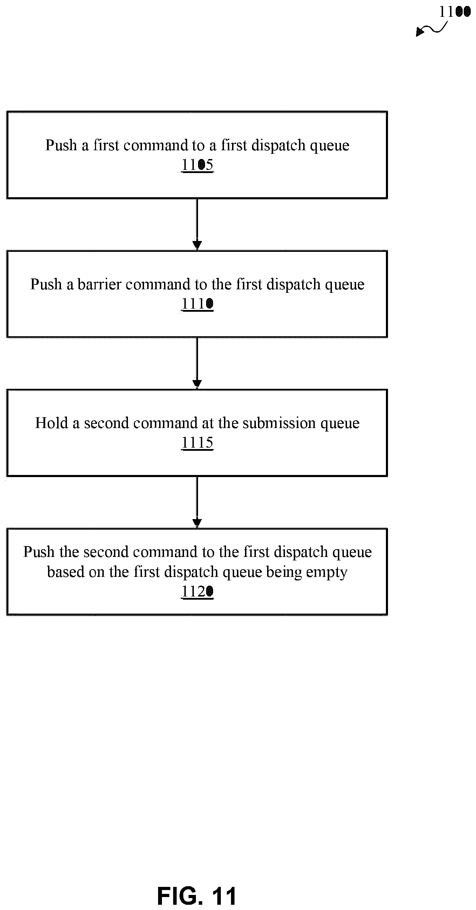

**FIG. 11** depicts a flow diagram illustrating an example method 1100 associated with the disclosed systems, in accordance with example implementations described herein. In some configurations, one or more aspects of method 1100 may be implemented by or in conjunction with microcontroller 140 of FIG. 1 and/or microcontroller 230 of FIG. 2. In some configurations, one or more aspects of method 1100 may be implemented by or in conjunction with machine 105, components of machine 105, or any combination thereof. The depicted method 1100 is just one implementation and one or more operations of method 1100 may be rearranged, reordered, omitted, and/or otherwise modified such that other implementations are possible and contemplated.

At 1105, method 1100 may include pushing a first command to a first dispatch queue. For example, based on executing software code at a processing element (PE) of a stacked memory module, a dispatcher of the PE (e.g., dispatcher 515) may push a first command of the software code from a submission queue to a first dispatch queue, the PE comprising multiple dispatch queues that include the first dispatch queue.

At 1110, method 1100 may include pushing a barrier command to the first dispatch queue. For example, a dispatcher of a PE (e.g., dispatcher 515) may push a barrier command of the software code from the submission queue to the first dispatch queue.

At 1115, method 1100 may include holding a second command at the submission queue. For example, the dispatcher may hold a second command of the software code at the submission queue based on the barrier command.

At 1120, method 1100 may include pushing the second command to the first dispatch queue based on the first dispatch queue being empty. For example, the dispatcher may push the second command from the submission queue to the first dispatch queue based on the dispatcher determining that the first dispatch queue is empty.

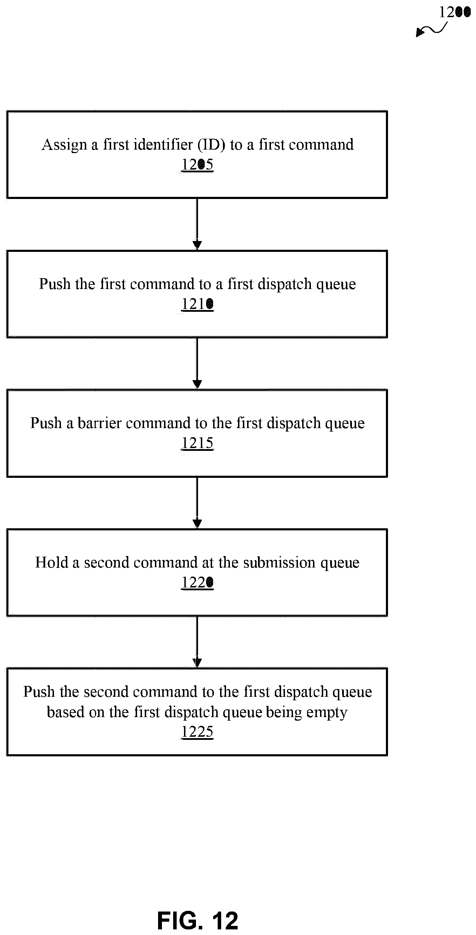

**FIG. 12** depicts a flow diagram illustrating an example method 1200 associated with the disclosed systems, in accordance with example implementations described herein. In some configurations, one or more aspects of method 1200 may be implemented by or in conjunction with microcontroller 140 of FIG. 1 and/or microcontroller 230 of FIG. 2. In some configurations, one or more aspects of method 1200 may be implemented by or in conjunction with machine 105, components of machine 105, or any combination thereof. The depicted method 1200 is just one implementation and one or more operations of method 1200 may be rearranged, reordered, omitted, and/or otherwise modified such that other implementations are possible and contemplated.

At 1205, method 1200 may include assigning a first identifier (ID) to a first command. For example, based on executing software code at a processing element (PE) of a stacked memory module, a dispatcher of the PE (e.g., dispatcher 515) may assign a first ID to a first command of the software code.

At 1210, method 1200 may include pushing the first command to a first dispatch queue of the PE. For example, the dispatcher may push, via a dispatcher of the PE, the first command from a submission queue to a first dispatch queue, the PE comprising multiple dispatch queues that include the first dispatch queue.

At 1215, method 1200 may include pushing a barrier command to the first dispatch queue. For example, the dispatcher may push a barrier command from the submission queue to the first dispatch queue, where the barrier command may be from a barrier function of the software code.

At 1220, method 1200 may include holding a second command at the submission queue. For example, the dispatcher may hold a second command of the software code at the submission queue based on the barrier command, where the second command may be assigned a second ID different from the first ID.

At 1225, method 1200 may include pushing the second command to the first dispatch queue based on the first dispatch queue being empty. For example, the dispatcher may push the second command from the submission queue to the first dispatch queue based on the dispatcher determining that the first dispatch queue is empty.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. Similarly, the bidirectional exchange of data between two devices (both devices transmit and receive during the exchange) may be described as 'communicating', when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

Many modifications and other examples as set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method comprising:
assigning a first identifier, ID, to a first command of software code executed at a processing element, PE, of a stacked memory module;
pushing, via a dispatcher of the PE, the first command from a submission queue to a first dispatch queue, the PE comprising multiple dispatch queues that include the first dispatch queue;
pushing, via the dispatcher, a barrier command of the software code from the submission queue to the first dispatch queue;
holding a second command of the software code at the submission queue based on the barrier command, the second command being assigned a second ID different from the first ID; and
pushing the second command from the submission queue to the first dispatch queue based on the dispatcher determining that the first dispatch queue is empty.

2. The method of claim 1, further comprising pushing the first command from the first dispatch queue to a completion queue based on the PE executing the first command, wherein pushing the second command from the submission queue to the first dispatch queue is based on the dispatcher determining that at least one of the first command or the barrier command is in the completion queue of the PE.

3. The method of claim 2, wherein the dispatcher determining that at least one of the first command or the barrier command is in the completion queue of the PE is based on the dispatcher reading, from the completion queue, at least one of the first ID of the first command or a third ID of the barrier command, the barrier command being assigned the third ID different from the first ID and the second ID.

4. The method of any one of claims 1 to 3, wherein executing the first command comprises executing a direct memory access command to retrieve a data value from the stacked memory module.

5. The method of claim 4, further comprising executing the second command based on pushing the second command from the submission queue to a second dispatch queue different from the first dispatch queue, wherein executing the second command comprises executing a computation based on the data value retrieved from the stacked memory module and placed in an on-processor memory of the PE.

6. The method of any one of claims 1 to 5, wherein executing the first command comprises executing a computation based on a data value retrieved from the stacked memory module.

7. The method of claim 6, further comprising executing the second command based on pushing the second command from the submission queue to a second dispatch queue different from the first dispatch queue, wherein executing the second command comprises executing a direct memory access command to write a result of the computation to the stacked memory module.

8. The method of any one of claims 1 to 7, wherein the dispatcher comprises at least one of a processor, a microcontroller, a field programmable gate array, or an application specific integrated circuit.

9. A method comprising:
executing software code at a processing element, PE, of a stacked memory module;
pushing, via a dispatcher of the PE, a first command of the software code from a submission queue to a first dispatch queue, the PE comprising multiple dispatch queues that include the first dispatch queue;
pushing, via the dispatcher, a barrier command of the software code from the submission queue to the first dispatch queue;
holding a second command of the software code at the submission queue based on the barrier command; and
pushing the second command from the submission queue to the first dispatch queue based on the dispatcher determining that the first dispatch queue is empty.

10. The method of claim 9, wherein pushing the second command from the submission queue to the first dispatch queue is based on the dispatcher determining that at least one of the first command or the barrier command is in a completion queue of the PE.

11. The method of claim 9 or 10, wherein the first command comprises a direct memory access command to retrieve a data value from the stacked memory module.

12. The method of claim 11, further comprising executing the second command based on pushing the second command from the submission queue to the first dispatch queue, wherein executing the second command comprises executing a computation based on the data value retrieved from the stacked memory module and placed in an on-processor memory of the PE.

13. The method of any one of the preceding claims, wherein:
the PE comprises a first computation lane for executing a first instruction set and a second computation lane for executing a second instruction set, exemplarily concurrently with the first instruction set,
the multiple dispatch queues correspond to the first computation lane, and
a second set of multiple dispatch queues correspond to the second computation lane,
wherein the multiple dispatch queues may include a direct memory access, DMA, input dispatch queue, a compute dispatch queue, and a DMA output dispatch queue.

14. The method of any one of the preceding claims, wherein pushing the first command to the first dispatch queue is based on the dispatcher determining a type of the first command, wherein the first dispatch queue is associated with the type of the first command and a second dispatch queue of the multiple dispatch queues is associated with a second type of command different from the type of the first command.

15. A device comprising:
one or more processors; and
memory storing instructions that, when executed by the one or more processors, cause the device to:
assign a first identifier, ID, to a first command of software code executed at a processing element, PE, of a stacked memory module;
push the first command from a submission queue to a first dispatch queue, the PE comprising multiple dispatch queues that include the first dispatch queue;
push a barrier command of the software code from the submission queue to the first dispatch queue;
hold a second command of the software code at the submission queue based on the barrier command, the second command being assigned a second ID different from the first ID; and
push the second command from the submission queue to the first dispatch queue based on the one or more processors determining that the first dispatch queue is empty.
